# EUROPEAN PATENT SPECIFICATION

(11) **EP 2 811 818 B1**
(45) Date of publication and mention of the grant of the patent: **16.08.2017**
(21) Application number: 13703091.2
(22) Date of filing: 08.02.2013
(51) Int. Cl.: A01G 9/22

(54) **FLAME RETARDANT CLOTH**
FEUERFESTES GEWEBE
TISSU IGNIFUGE

(30) Priority: 10.02.2012 BE 201200084
(43) Date of publication of application: 17.12.2014
(73) Proprietor: Low & Bonar, 9240 Zele (BE)
(72) Inventor: SWENNEN, Ives, B-9850 Hansbeke (BE); PARREIN, Tim, B-9000 Gent (BE); COEN, Kris, B-9430 Lede (BE); VAN CAMP, Tamara, B-9290 Overmere (BE)
(74) Representative: CPW GmbH
(86) International application number: PCT/EP2013/052540
(87) International publication number: WO 2013/117696

(56) References cited:
- EP-A1- 1 825 747
- EP-B1- 0 109 951
- EP-B1- 0 173 856
- WO-A1-94/22288
- WO-A1-2011/096882

## Description

### FIELD OF THE INVENTION

The present invention relates to screens that function to provide shade and/or save energy. More in particular, the invention relates to flame retardant, drapable screens for use in conservatories or greenhouses, mainly screens that partially consist of thin and flexible plastic strips that can be converted into a large, flat and pliable product, such as a cloth, by weaving, crocheting or knitting, using one or more yarns, if necessary.

### BACKGROUND OF THE INVENTION

Such screens are frequently used for protecting plants, in the open field or indoors in greenhouses, for controlling the incoming and outgoing radiation energy to a certain extent, so that the plants are protected against too strong sunlight and against too high or too low temperatures. Said screens, also called curtains, are spread vertically and/or horizontally over very large areas, with areas of 30,000 m² not being exceptional. Because the plants to be protected may represent a great value, protecting them frequently serves a major economic purpose. Usually, opening and closing the screens is done by electric means, with the screens being moved to the active or inactive positions by means of motors.

Such screens for greenhouses are described, for example, in EP 0 109 951. The screens described therein comprise narrow strips of a plastic film, which strips are held together by means of textile yarns. The strips may be made of a polyester film that is metallised on one or both sides.

In such environments a fire may start, for example in the case of the electric defects, during repair work involving grinding or welding, or of vehicles moving under the screen in the greenhouse. It has been established that such fires can spread very quickly over large areas via the screens. The fires constitute a danger to personnel present in the greenhouses, and can be destructive to the greenhouse itself and also to its contents.

It has been found to be difficult to treat existing screens so that they will be flame retardant whilst still retaining their resistance against UV radiation over the desired period of at least four or five years and, in addition, will not be too voluminous when moved aside to an inactive position.

Flame retardant textile is used in conditions in which the risk of a locally started fire spreading over a larger area is to be avoided.

Flame retardant textile is difficult to produce, however, on account of the complex and long production process that is involved. Said textile is furthermore not heat reflective, it does not transmit much light, it attracts dirt and absorbs water. On top of that, it reflects the sunrays only partially. Its production costs are high and it is only available in limited widths. Consequently, said textile cannot be used very well in greenhouse environments.

Meanwhile, technical progress in the field of plastic film has reached the stage where flame retardant properties can be realised, but there is still the problem of preventing or at least retarding the ageing process, so that the user of the film can be guaranteed a particular life span. After all, the problem is that the addition of a halogen for the purpose of obtaining the fire retardant property took place at the expense of the UV stability, because the latter decreased to such an extent that the material fell apart, either during its production already or shortly after being exposed to UV radiation.

AU-A-79349/91 describes a flame retardant laminate for use as an insulating layer and diffusion barrier in the building industry. Said laminate can also be used as a rolling curtain, if desired, but it does not meet the requirements made of a screen for greenhouses. After all, it is waterproof, which means that large puddles of water can form on the horizontal parts of the screen, which puddles constitute a weight load which the screen systems are not designed to support. Furthermore, condensation can form on the underside of the laminate and drip onto the plants, which may lead to damage to the plants. Nor does the laminate have the other required characteristics, such as the capability of being draped, which is needed in order to be able to move the curtain aside and store it in the form of a thin package, so that it only blocks a small part of the incident light.

Synthetic materials or plastics having a chemical structure that decreases combustibility have so far been fairly costly to produce. There is also a demand for plant protection screens that exhibit different degrees of transparency, thus further increasing the complexity of meeting the frequently stringent requirements regarding UV resistance.

In view of the various requirements, such as the possibility of draping, moving aside and easy installation, in combination with the requirements of low weight and small volume, the materials used for the screen must be very thin. This requirement is difficult to reconcile with the requirement on the one hand of long-term UV stability, which becomes easier to meet as the film of the laminate becomes thicker, because of the filtering effect, and on the other hand the requirement of low combustibility, with the amount of material affecting the self-extinguishing capability. A thinner material may also comprise, albeit less, fireproof agent.

Thus a demand remained for a not-easily flammable, long-term UV resistant, drapable screen that is weather resistant.

US 2001/0018476 A1 describes films suitable for use in greenhouses that may comprise several layers and to which dimethyl methyl phosphonate has been added as a flame retardant. The phosphorus concentrations used therein amount to at least 0.4992 wt.% for films comprising several layers, and even 0.9984 wt.% for films comprising only one layer.

WO 2011/096882 describes a screen for greenhouses in which strips of a film material are interconnected by means of a yarn system to form a continuous product, and in which the film material comprises several layers, at least one being white and at least one being black. The film material in WO 2001/096882 comprises a phosphorus-containing flame retardant in a concentration of more than 1500 ppm phosphorus. No mention is made in WO 2011/096882 of the properties of the yarn system.

WO 94/22288 A1 and corresponding EP 696884 describe a screen comprising flexible strips consisting of a halogen- or phosphorus-containing plastic film, preferably made of PVC, PVDC, PCTFE, PVF, FEP, PTFE, E/TFE or PETP, which also comprises a UV stabiliser, at least partially laminated with a metal film and connected into a continuous product by crocheting or weaving, using a yarn system, said yarn system at least partially consisting of a flame retardant material, such as modacryl yarns. In the screen according to WO 94/22288 A1, the strips as well as the yarn system are at least partially made of materials which are flame retardant or not easily flammable.

EP 1 825 747 A1 describes a UV resistant and flame resistant drapable screen, whose strips comprise several layers, among which a metal film and also a sulphur-based polymer layer. The sulphur-based polymers provide UV stability and flame resistance. Also their hydrolytic stability is claimed to be better (according to the steam sterilisation test method) than that of the PVDF of EP-A-696884. In support of said claims, the "Limiting Oxygen Index" (LOI) values for halogen and sulphur-containing polymers is compared in a table, with all LOI values starting from a minimum range of 26 - 33 % represented by PSU (polysulfone) and extending up to 44 % represented by PPS (polyphenylene sulphide) as the sulphur based polymer layer. It is stated in EP 1 825 747 A1 that an LOI value higher than 21 % indicates that a material has flame retardant properties, so that it can be stated that the higher the LOI, the better it will be. It is proposed in EP 1 825 747 A1 to use materials that are not easily flammable for the yarn. In this case, too, both the strips and the yarns are thus made of materials that are not easily flammable.

EP 0 173 846 B1 describes polycarbonate moulding compositions based on thermoplastic, halogen-free, sulphur-free, and phosphorous free aromatic polycarbonates for use in the field of apparatuses, electricity, electronics, installation, heating and traffic, for example in coffee makers, electric cookers, barbeque grills, flat irons, washing machines, cameras, slide projectors, telephone installations, fax machines and so on. Nothing is mentioned about use of the moulding composition for shading or screen applications.

Halogens are associated with a higher smoke development in the event of a fire, with the smoke being considered to be more corrosive and in some cases even more toxic. Sulphur, too, is associated with corrosive and possibly toxic combustion products and consequently, in the event of a fire, also with smoke that is said to have the above negative effects. In addition, sulphur-based polymers are very scarce and more difficult to obtain.

Consequently, a demand for polymer-based screens comprising less or no sulphur, halogens and/or phosphorus remains.

In addition, flame retardants generally appear to decrease the UV resistance of polymers, which has an adverse effect on the life of the energy-absorbing and/or shading screens that incorporate a great deal of flame retardants.

Accordingly, the objective of reducing or possibly excluding the use of flame retardants based on sulphur, halogens and/or phosphorus remains.

DE 202008004181 U1 describes a shading screen for use in greenhouses in which use is made of shading strips made of polyolefin, preferably polyethylene. According to DE 202008004181 U1, polyethylene is not easily flammable, but no reference is made to any test method or criterion on which this claim is based. In DE 202008004181 U1, the polyethylene is mainly selected because it is impervious to the glue that is used for affixing the reflective strips provided with an aluminium metal film to the screen. For the yarn system, DE 202008004181 U1 prefers to use a material that is not easily flammable, in particular a modified polyester, such as "Trevira CS" (brand name) and/or modacryl fibres. This leads to a further decrease of the flammability of the screen. According to DE 202008004181 U1, this makes it possible to refrain from the use of halogen- or phosphorus-containing components. Modacryl fibres are copolymers of acrylonitrile and vinyl chloride, however, and actually have a high halogen content. Trevira CS is based on a polyester in which an organic phosphorus compound is incorporated as a comonomer. It contains a significant amount of phosphorus, therefore. The screen according to DE 202008004181 U1 is not at all free from components comprising halogens or phosphorus, therefore. According to table A-6 on page A-11 of DOT/FAA/AR-05/14, "Polymer Flammability", Final Report, Office of Aviation Research, May 2005, available via US National Technical Information Services (NTIS), the LOI of polyethylene is only 17%, which is among the lowest of the plastics included in the list. In the introduction to this report, it is moreover stated (p. 2, top paragraph) that the results of fire tests depend on the apparatus, the conditions and on the dimensions of the sample that was used in the test. Because no mention is made in DE 202008004181 U1 of a particular test method and/or success criterion and no reference is made thereto, either, the claims made in said document regarding fire prevention are not transferable and cannot be used for learning purposes, therefore. From the information that DE 202008004181 U1 does offer it can only be derived that the advantageous fire properties were attributed very lightly indeed in said document.

As regards the fire properties of plastic objects, reference is usually made to the fire tests of DIN 4102, part 2 and part 1, and also of UL 94. Because said test do not correspond very well to the actual fire behaviour of screen materials used in greenhouse farming, more recently the new technical agreement NTA 8825:2010 was developed, which is specifically aimed at the fire behaviour of screen materials for use in greenhouses. The requirements in accordance with said agreement are at present already being imposed in the most important markets in Western Europe.

Accordingly, there remains a demand for energy-absorbing and/or shading screens that comply with said agreement NTA 8825:2010, but that do not comprise high concentrations of halogens, phosphorus and/or sulphur whilst nevertheless being sufficiently UV resistant, so that the screens have a sufficiently long life.

The object of the present invention is to prevent or at least alleviate the above-described problems and/or generally to provide improvements.

### SUMMARY OF THE INVENTION

According to the invention, in order to achieve that object, there is provided a screen, and also a method for the production thereof, as defined in each of the appended claims.

The present invention provides a flame retardant drapable screen for providing shade and/or saving energy, in particular in greenhouses, which screen comprises flexible strips having a thickness of at most 100 µm formed into a continuous product by weaving, knitting, crocheting or knotting, using a yarn system,
- wherein the strips form at least part of the surface area of the product and wherein at least some of the strips consist of light- and/or heat-reflective strips,
- wherein at least part of the yarn system consists of flame retardant yarns, characterised in that the strips
   a) are made from a plastic having a "Limiting Oxygen Index" (LOI) of at least 18%, and less than 26%,
   b) contain on average at most 0.15 wt.% phosphorus (P) over all layers when comprising several layers,
   c) contain at most 900 ppm by weight individually of chlorine, fluorine or bromine, and
   d) at most 1.0 wt.% sulphur in total,
the concentrations in the strips being taken in relation to the total weight of the material of the strips, including all the additives and filling materials, if present.

We have found that the screen according to the present invention provides the advantage that it scores very well in the tests of NTA 8825:2010, in the sense that it even complies with the fire propagation requirements as required in order to be categorised in Class 1 according to Table 1 from the aforesaid agreement, and also in order to be awarded classification "dr0" according to the burning drop test.

The inventors have found that, in spite of the fact that the strips can still inflame in normal ambient air with 21% oxygen, combustion and/or flame propagation take place less rapidly than with the even more usual plastics, which usually also have an even lower LOI, such as common untreated polyethylene or polypropylene, which both have an LOI of only 17%, and that the flame retardant yarns that cross the strips can stop the aforesaid flame propagation. The inventors believe that because of this combination of properties, the screen according to the present invention achieves the aforesaid advantageous results in the test according to NTA 8825:2010, and that in accordance with this recent test it can consequently be categorised as being flame retardant according to the highest class 1, subclass dr0.

The screen according to the present invention provides the advantage that no use needs to be made for the strips of plastics that are less readily available, such as plastics based on sulphur of fluorine, or of chlorine-containing plastics, such as polyvinyl chloride (PVC). To make PVC flexible, significant amounts of plasticisers are used, which are combustible. Chlorine- and/or bromine-containing plastics involve their own problems, as already mentioned elsewhere in this document.

The screen according to the present invention has the additional advantage that hardly any flame retardants are incorporated in the strips. In order to incorporate said flame retardants into the strips, any of the methods can be used which are known for said purpose. For example the flame retardant(s) may be incorporated into the strips during the manufacture of the strips by mixing the flame retardant(s) with the polymer of which the strips are made. It is also possible to incorporate the flame retardant(s) by covalently binding it (them) into the polymer chains of the polymer of which the strip forming polymer consists, wherein the binding may be realized by polycondensation or polyaddition. Furthermore, it is possible to coat at least one surface of the strips with the flame retard(s) in a conventional manner like dipping, impregnating or spraying.

After all, flame retardants usually have a negative effect on the UV resistance of polymer films. In the case of degradation under UV light, the strength of the polymer strips will decrease, resulting in a shorter life of the screens. Since hardly any flame retardants must be incorporated in the polymer of the screen according to the present invention, fewer UV stabilisers will thus be needed in order to achieve a sufficient UV resistance and consequently a sufficiently long life of the screen. Flame retardants and UV stabilisers are fairly complex ingredients that are relatively scarce. The screens according to the present invention provide the advantage that fewer of said ingredients must be used in order to nevertheless achieve the objects required by the aforesaid agreements regarding fire behaviour.

Halogens are associated with a higher smoke development in the event of a fire, the smoke being considered to be more corrosive and in some cases even more toxic. Sulphur, too, is associated with corrosive and possibly toxic combustion products and thus, in the event of a fire, also with smoke that is said to have the aforesaid negative effects. Accordingly, the screen according to the present invention has the advantage that fewer halogens, if any, must be used in order to nevertheless meet the requirements of the aforesaid agreements in connection with fire behaviour, so that these problems, too, are alleviated and/or prevented.

Flame retardants in polyester have the effect of reducing the hydrolytic stability of the polyester, resulting in a shorter life of the screen made therefrom. This effect can be explained by means of the so-called steam boiler test, or also by means of the steam sterilisation test method. In a test chosen by the inventors, the evolution of the mechanical properties is followed, preferably the tensile strength and the elongation at break that remain after exposure of a sample to an atmosphere of saturated humidity and an elevated pressure in an autoclave for 24, 48 and 60 hours, respectively, during which the boiling point of water was increased to about 120°C. This property is very important in the case of screens used in greenhouses, because the atmosphere in greenhouses can often be very humid. Because fewer flame retardants, if any, must be used for the screens according to the present invention, hardly any, hydrolysis stabilisers must be used. Said additives are very special and scarce, and reducing or preventing the use thereof involves a significant economic advantage in the production of screens.

In another embodiment, the present invention provides a method for the production of the screen according to the present invention, which comprises the step of weaving the strips, wherein preferably the strips are woven in the warp direction and the flame retardant yarns are woven in the weft direction.

### DETAILED DESCRIPTION

The present invention will now be described with reference to specific embodiments and with reference to specific drawings, although the invention is not limited thereto, but only by the claims.

In addition to that, the terms "first", "second", "third" and the like as used in the description and in the claims are used to distinguish between elements of the same kind and not necessarily to describe a sequential or chronological order. Said terms are interchangeable under suitable circumstances, and the embodiments of the invention can occur in a different order than described and illustrated herein.

In addition to that, the terms "top", "bottom", "over", "under" and the like as used in the description and the claims are used for descriptive purposes and not necessarily to indicate relative positions. The terms thus used are interchangeable under suitable circumstances and the embodiments of the invention can occur in a different order than described and illustrated herein.

The term "comprise" as used in the claims must not be regarded as limitative with regard to the elements listed within that context. It does not exclude the possible use of further elements or steps. It must be regarded as prescribing the presence of the mentioned characteristics, numbers, steps or parts as prescribed, but does not exclude the presence or addition of one or more other characteristics, numbers, steps or parts, or groups thereof. Thus, the scope of "an object comprising means A and B" must not be limited to an object that only consists of means A and B. It means that A and B are the only elements that are relevant to the object in connection with the present invention.

A screen according to the present invention can also be called a cloth or a screen cloth. A screen cloth can have any suitable structure known to the skilled person, among which structures described in the cited prior art, such as, for example, EP 109951 A1, AU 1991179349 A1 or WO 2011/096882.

The screens according to the present invention have a maximum mass of 300 g/m². They are usually produced in a specified width and an unspecified length. The lateral direction is also called the production direction. The screens consist of a material into which a foil, bands and possibly yarn are woven, knitted and/or laminated.

The screens according to the present invention are normally used for the reduction of light emission, for energy saving and for controlling various climate factors, such as light, air humidity and temperature. The sides of a screen can be referred to as the upper side and the bottom side. The upper side of the screen material is the side that in practice must be directed toward the outside light, i.e. usually toward the roof or the wall of the greenhouse. The bottom side of the screen material is the side that is directed toward the plants in the greenhouse.

The flame retardant yarns, also called threads, are preferably modacryl yarns, but they can also be made from materials selected from aramides, fluoropolymers, melamine and melamine derivates, sulphur-based polymers, trevira CS, inorganic fibres, such as ceramic, glass and basalt fibres, protein fibres, and combinations thereof. Suitable sulphur-based polymers include: polyphenylene sulphide (PPS), polyether sulphon (PES), polyphenyl sulphon (PPSU), polysulphon (PSU), aromatic polysulphon (PSF), polyphenylene sulphide sulphon (PPSS), polyphenylene sulphide ketone (PPSK) and block copolymers of PPSS and PPSK, polythioether ketone (PTEK) and combinations thereof.

In one embodiment of the screen according to the present invention, the strips preferably comprise less than 1500 ppm by weight, more preferably at most 0.110 wt.% or 1100 ppm by weight, and even more preferably at most 0.100 wt.%, preferably at most 0.080 wt.%, more preferably at most 0.060 wt.%, even more preferably at most 0.050 wt.%, preferably at most 0.040 wt.%, more preferably at most 0.030 wt.%, even more preferably at most 0.025 wt.% phosphorus (P). Optionally the strips comprise at least 0.021 wt.%, preferably at least 0.025 wt.%, more preferably at least 0.030 wt.%, even more preferably at least 0.035 wt.%, preferably at least 0.040 wt.%, more preferably at least 0.050 wt.%, even more preferably at least 0.070 wt.%, preferably at least 0.080 wt.%, more preferably at least 0.090 wt.% and even more preferably at least 0.100 wt.% phosphorus.

In the screen according to the present invention the strips comprise at most 900 ppm individually of chlorine, fluorine and bromine, preferably at most 800 ppm by weight, more preferably at most 700 ppm by weight, preferably at most 600 ppm by weight, more preferably at most 500 ppm by weight, even more preferably at most 400 ppm by weight, preferably at most 300 ppm by weight, more preferably at most 200 ppm by weight, even more preferably at most 100 ppm by weight. This is understood to mean that the concentrations of chlorine, fluorine and bromine individually meet one of these requirements and can vary in relation to each other, if desired. Thus it is not unusual that, because of the use of fluorine-containing means in the production, the fluorine concentrations may be a little higher than the chlorine and/or bromine concentrations.

The chlorine, bromine, fluorine and sulphur concentrations are preferably determined by means of a method based on X-ray fluorescence (XRF), also called X-ray fluorescence spectrometry.

In one embodiment of the screen according to the present invention, the strips preferably comprise at most 0.90 wt.% sulphur, preferably at most 0.80 wt.%, more preferably at most 0.50 wt.%, even more preferably at most 0.30 wt.%, preferably at most 0.10 wt.%, more preferably at most 0.050 wt.%, even more preferably at most 0.030 wt.%, preferably at most 200 ppm by weight, more preferably at most 100 ppm by weight, even more preferably at most 50 ppm by weight.

In one embodiment of the screen, the strips comprise less than 1500 ppm by weight jointly of chlorine, fluorine and bromine. This provides the advantage that the strips according to the usual standards in this field can be described as "free from halogen". More preferably, the strips comprise at most 1200 ppm by weight together of chlorine, fluorine and bromine, more preferably at most 1000 ppm by weight, even more preferably at most 750 ppm by weight, preferably at most 700 ppm by weight, more preferably at most 600 ppm by weight, even more preferably at most 500 ppm by weight.

According to ULLMANN'S ENZYCLOPEDIA OF INDUSTRIAL CHEMISTRY", (1992) Volume A 20, 5th completely rev. ed., text paragraph bridging pages 483 and 484, the "Limiting Oxygen Index" LOI of a plastic denotes the volume fraction of oxygen in an oxygen-nitrogen mixture expressed in volume percent that just supports combustion of a well-defined specimen under standard conditions. A high LOI indicates a low flammability. Therefore, below the LOI of a burning plastic sample the oxygen concentration in nitrogen (or air) is too low to support combustion so that a burning sample of the plastic sample extinguishes. In the screen according to the present invention, the plastic of the strips has an LOI of at least 18%, preferably at least 19%, more preferably at least 20%. This has the advantage that the speed of ignition and of flame propagation decreases even further, so that the screen will even more easily obtain high scores in the tests prescribed in the aforesaid agreements.

In the screen according to the present invention, the LOI of the plastic of the strips is less than 26%, preferably not higher than 25%, more preferably not higher than 24%, and most preferably not higher than 23%. Plastics having a higher LOI are usually scarcer and more difficult to obtain than those having a lower LOI. The inventors have surprisingly found that the use of the plastics having the above LOI characteristics makes it possible to obtain screens that exhibit the desired advantageous behaviour within the framework of the aforesaid agreements regarding fire behaviour. According to the present invention it is thus not necessary to use plastics having an LOI of 26% or even higher, which are difficult to obtain, in order to meet the requirements of the highest classifications according to agreement NTA 8825:2010.

In one embodiment of the screen, the strips have a thickness which is at least 12 µm, preferably at least 15 µm, more preferably at least 20 µm, even more preferably at least 25 µm, and yet even more preferably at least 30 µm, optionally at most 90 µm, preferably at most 80 µm, more preferably at most 70 µm, even more preferably at most 60 µm, and preferably at most 50 µm.

In one embodiment of the screen according to the present invention, at least one layer of the light- and/or heat-reflective strips comprises a filler, preferably at most 15 wt.%, more preferably at most 10 wt.%, even more preferably at most 5%, based on the layer comprising the filler, preferably a white filling material, and preferably titanium dioxide (TiO₂), preferably rutile TiO₂. More preferably, a stabilised rutile type of TiO₂ provided with an inorganic coating is used for suppressing the photocatalytic activity of the TiO₂. Said filling material provides or contributes to the reflective properties of the polymer strips, and thus to those of the screen. Brightly coloured, and especially white, filling materials are preferred because of their higher reflective properties. Not only is TiO₂ white but, if the right quality is used, it can also be very effective in providing UV protection for the plants screened by the screen. Thus, rutile TiO₂ whose particles are coated with alumina (Al₂O₃) or silica (SiO₂) can in itself already provide sufficient UV stability, so that it is not necessary to incorporate additional UV stabilisers in the same strips in order to realise an acceptable life span.

It may be an object to obtain additional light and energy properties. In one embodiment of the screen according to the present invention, the plastic material of the light-and/or heat-reflective comprises at least two layers, at least one layer being white and at least one layer being back, with the white layer comprising a white pigment in an amount of 5 to 50 wt.%, based on the total weight of the white layer, and the black layer comprising a black darkening agent, wherein the black darkening agent preferably comprises blacking powder, carbon powder or carbon black and/or wherein the black darkening agent is preferably present in a concentration of 0.2 to 10 wt.%, preferably at least 1.0 wt.%, based on the total weight of the black layer. Such strips have the advantage that very efficient assimilation and/or blackout properties can be achieved in order to reduce or even prevent the egress of light from a greenhouse, if desired.

In one embodiment of the screen according to the present invention, the plastic material of the light-and/or heat-reflective strips is based on polyester, preferably at least uniaxially, more preferably biaxially, oriented polyester, more preferably a biaxially oriented film based on a plastic selected from polyethylene terephthalate, polybutylene terephthalate, polytrimethylene terephthalate, the corresponding naphthalates, and copolymers and combinations thereof, preferably polyethylene therephtalate, wherein the material preferably comprises at least 70 wt.% polyester. According to table A-6 on page A-11 of DOT/FAA/AR-05/14, "Polymer Flammability", Final report, Office of Aviation Research, May 2005, available through the US National Technical Information Services (NTIS), the LOI of polyethylene terephthalate is 20% and that of polybutylene terephthalate is 23%.

In one embodiment of the screen according to the present invention, at least one layer of the material of the light- and/or heat-reflective strips comprises a UV stabiliser, preferably in a concentration of 0.05 to 5.0 wt.%, based on the total weight of the layer. The UV stabilisers are preferably used in a concentration of at least 0.10 wt.%, more preferably at least 0.30 wt.%, even more preferably at least 0.50 wt.%, preferably at least 0.70 wt.%, more preferably at least 0.80 wt.% and even more preferably at least 0.90 wt.%. The UV stabilisers are preferably used in a concentration of at most 4.0 wt.% more preferably at most 3.0 wt.%, even more preferably at most 2.0 wt.%, preferably at most 1.50 wt.%, more preferably at most 1.25 wt.% and even more preferably at most 1.10 wt.%, in all cases on the same basis.

In one embodiment of the screen according to the present invention, the light-and/or heat-reflective strips are accompanied on both long sides by a plastic monofilament, wherein the plastic of the monofilament preferably comprises a UV stabiliser, and wherein preferably the plastic of the monofilament is polyethylene, more preferably low-pressure polyethylene, which is also frequently referred to as "high-density polyethylene".

In one embodiment of the screen according to the present invention, the plastic monofilament is configured as a twisted pair, with the transverse elements being incorporated therebetween, at least one turn of said pair being positioned between two respective successive transverse elements. This structure provides the advantage that it is very suitable for producing cloths in which the strips are adequately held in place. In this way strips can be kept free, i.e. without a strip, so that the range of possibilities regarding the transmission of light but also of air convection or wind and/or water are extended even further in comparison with cloths having a simpler structure.

In one embodiment of the screen according to the present invention, there is provided, seen in the direction transversely to the light- and/or heat-reflective strips, a transparent strip or an empty position either (i) between each light-and/or heat-reflective strip or (ii) between each pair of successive light-and/or heat reflecting strips or (iii) between each set of three successive light- and/or heat-reflective strips, or (iv) between each set of four successive light-and/or heat-reflective strips, or (v) between each set of five successive light-and/or reflective strips. In this way screens having different shading degrees can be provided. Thus, one open or transparent strip combined with one white strip can provide a shading degree of 40%. Two white strips can provide a shading degree of about 50%, and five white strips can provide a shading degree of 60%, for example. Depending on the type of plant, the climate and the arrangement it is possible to select the desired shading degree in that case.

In one embodiment of the screen according to the present invention, the light-and heat-reflective strips form at least 20% of the surface area of the screen, preferably at least 35%, optionally at least 45%, possibly at least 55% and also possibly at least 75% of the surface area of the screen. In this way an increasingly high shading effect can be achieved by means of the screen.
In one embodiment of the screen according to the present invention, the flame retardant yarns are arranged on the light- and/or heat-reflective strips single crossed. In this structure the flame retardant yarns can more easily perform their function of stopping a possible propagation of fire in the longitudinal direction of a strip.

In one embodiment of the screen according to the present invention, the flame retardant yarns are selected from modacryl yarn, preferably spun modacryl yarn, flame retardant polyester yarn, flame retardant polyester monofilament and combinations thereof.

In one embodiment of the screen according to the present invention, a plastic tape is provided in the yarn system, in parallel therewith, in addition to the flame retardant yarns, which plastic tape is preferably a transparent or white plastic tape, wherein the plastic of the tape preferably comprises a UV stabiliser, and wherein preferably the plastic for the tape meets the same requirements as the plastic for the strips, more preferably polyester, even more preferably polyethylene therephtalate (PET). In this embodiment the strips provide the advantage of higher thermal shape stability.

In this embodiment with the plastic tape, the flame retardant yarns and the plastic tape preferably alternate. The advantage of this is that the surface exhibits a higher degree of uniformity, so that the technical properties of the screen cloth will be more uniform.

In one embodiment of the screen according to the present invention, the light-and/or heat-reflective strips extend in the warp direction and the flame retardant yarns extend in the weft direction.

In one embodiment of the screen according to the present invention, the screen is woven. This is a structure that is easiest to obtain, much easier than a knitted and/or crocheted structure. In addition, this structure provides a higher degree of flexibility in the design of the screen.

In one embodiment of the screen, the strips have a width that ranges between 2 mm and 10 mm.

The inventors have found that the screens according to the present invention can also be used in the construction industry, and in horticultural in general, i.e. not necessarily in greenhouses but also in the open field, if desired for similar shading and/or energy-absorption purposes, or even duly fought decorative purposes, even if only temporarily, for example during events.

## Claims

1. A flame retardant, drapeable screen for providing shade and/or saving energy, in particular in greenhouses, which screen comprises flexible strips having a thickness of at most 100 µm formed into a continuous product by weaving, knitting, crocheting or knotting, using a yarn system,
- wherein the strips form at least part of the surface area of the product and wherein at least some of the strips consist of light- and/or heat-reflective strips,
- wherein at least part of the yarn system consists of flame retardant yarns, **characterised in that** the strips
a) are made from a plastic having a "Limiting Oxygen Index" (LOI) of at least 18% and less than 26%,
b) contain on average at most 0.15 wt.% phosphorus (P) over all layers when comprising several layers,
c) contain at most 900 ppm by weight individually of chlorine, fluorine or bromine, and
d) at most 1.0 wt.% sulphur in total,
the concentrations in the strips being taken in relation to the total weight of the material of the strips, including all the additives and filling materials, if present.

2. The screen according to any one of the preceding claims, wherein at least one layer of the light- and/or heat-reflective strips comprises a filler, preferably at most 15 wt.%, based on the layer comprising the filler, preferably a white filling material, and preferably titanium dioxide (TiO₂), preferably rutile TiO₂.

3. The screen according to any one of the preceding claims, wherein the plastic material of the light-and/or heat-reflective comprises at least two layers, at least one layer being white and at least one layer being black, with the white layer comprising a white pigment in an amount of 5 to 50 wt.%, based on the total weight of the white layer, and the black layer comprising a black darkening agent, wherein the black darkening agent preferably comprises blacking powder, carbon powder or carbon black and/or wherein the black darkening agent is preferably present in a concentration of 0.2 to 10 wt.%, preferably at least 1.0 wt.%, based on the total weight of the black layer.

4. The screen according to any one of the preceding claims, wherein the plastic material of the light-and/or heat-reflective strips is based on polyester, preferably at least uniaxially, more preferably biaxially, oriented polyester, more preferably a biaxially oriented film based on a plastic selected from polyethylene terephthalate, polybutylene terephthalate, polytrimethylene terephthalate, the corresponding naphthalates, and copolymers and combinations thereof, preferably polyethylene therephtalate, wherein the material preferably comprises at least 70 wt.% polyester.

5. The screen according to any one of the preceding claims, wherein the light-and/or heat-reflective strips are accompanied on both long sides by a plastic monofilament, wherein the plastic of the monofilament preferably comprises a UV stabiliser, and wherein preferably the plastic of the monofilament is polyethylene, more preferably low-pressure polyethylene or, in other words, high-density polyethylene.

6. The screen according to any one of the preceding claims, wherein the plastic monofilament is configured as a twisted pair, with the transverse elements being incorporated therebetween, at least one turn of said pair being positioned between two respective successive transverse elements.

7. The screen according to any one of the preceding claims, wherein, seen in the direction transversely to the light- and/or heat-reflective strips, a transparent strip or an empty position is provided either (i) between each light-and/or heat-reflective strip or (ii) between each pair of successive light-and/or heat reflecting strips or (iii) between each set of three successive light- and/or heat-reflective strips, or (iv) between each set of four successive light-and/or heat-reflective strips, or (v) between each set of five successive light-and/or reflective strips.

8. The screen according to any one of the preceding claims, wherein the light-and heat-reflective strips form at least 20% of the surface area of the screen, preferably at least 35%, optionally at least 45%, possibly at least 55% and also possibly at least 75% of the surface area of the screen.

9. The screen according to any one of the preceding claims, wherein the flame retardant yarns are arranged on the light-and/or heat-reflective strips single crossed.

10. The screen according to any one of the preceding claims, wherein the flame retardant yarns are selected from modacryl yarn, preferably spun modacryl yarn, flame retardant polyester yarn, flame retardant polyester monofilament and combinations thereof.

11. The screen according to any one of the preceding claims, wherein a plastic tape is provided in the yarn system, in parallel therewith, in addition to the flame retardant yarns, which plastic tape is preferably a transparent or white plastic tape, wherein the plastic of the tape preferably comprises a UV stabiliser, and wherein preferably the plastic for the tape meets the same requirements as the plastic for the strips, more preferably polyester, even more preferably polyethylene therephtalate (PET).

12. The screen according to any one of the preceding claims, wherein the flame retardant yarns and the plastic tape alternate.

13. The screen according to any one of the preceding claims, wherein the light-and/or heat-reflective strips extend in the warp direction and the flame retardant yarns extend in the weft direction.

14. A method for the production of the screen according to any one of the preceding claims, which comprises the step of weaving the strips, wherein preferably the strips are woven in the warp direction.

## Patentansprüche

1. Flammhemmender, drapierbarer Schirm zum Spenden von Schatten und/oder zum Einsparen von Energie, insbesondere in Gewächshäusern, wobei der Schirm flexible Streifen einer Dicke von höchstens 100 µm umfasst, die durch Verweben, Stricken, Häkeln oder Knoten unter Verwendung eines Fadensystems zu einem zusammenhängenden Produkt geformt werden,
- wobei die Streifen mindestens einen Teil der Oberfläche des Produkts bilden und wobei mindestens einige der Streifen aus licht- und/oder wärmereflektierenden Streifen bestehen,
- wobei mindestens ein Teil des Fadensystems aus flammhemmenden Garnen besteht, **dadurch gekennzeichnet, dass** die Streifen
a) aus einem Kunststoff mit einem "Limited Oxygen Index" (LOI-Wert) von mindestens 18 % und weniger als 26 % hergestellt werden,
b) im Durchschnitt höchstens 0,15 Gew-% Phosphor (P) über allen Schichten enthalten, sofern sie mehrere Schichten umfassen,
c) höchstens 900 Gew.-ppm von jeweils Chlor, Fluor oder Brom enthalten und
d) insgesamt höchstens 1,0 Gew.% Schwefel,
wobei die Konzentrationen in den Streifen in Relation gesetzt werden zum Gesamtgewicht des Materials der Streifen, einschließlich aller eventuell vorhandenen Additive und Füllstoffe.

2. Schirm nach einem der vorhergehenden Ansprüche, wobei mindestens eine Schicht der licht- und/oder wärmereflektierenden Streifen einen Füllstoff mit bevorzugt höchstens 15 Gew.-% bezogen auf die den Füllstoff enthaltende Schicht, bevorzugt einen weißen Füllstoff, bevorzugt Titandioxid (Ti0₂) und bevorzugt Rutil-Titandioxid Ti0₂ umfasst.

3. Schirm nach einem der vorhergehenden Ansprüche, wobei das Kunststoffmaterial der licht- und/oder wärmereflektierenden Streifen mindestens zwei Schichten umfasst, von denen mindestens eine Schicht weiß und mindestens eine Schicht schwarz ist, wobei die weiße Schicht ein weißes Pigment in einer Menge von 5 bis 50 Gew.-% bezogen auf das Gesamtgewicht der weißen Schicht und die schwarze Schicht ein schwarzes Abdunklungsmittel umfasst, wobei das schwarze Abdunklungsmittel bevorzugt Schwärzendes Pulver Kohlenstoffpulver oder Industrieruß umfasst und/oder wobei das schwarze Abdunklungsmittel bevorzugt in einer Konzentration von 0,2 bis 10 Gew.-%, bevorzugt von mindestens 1,0 Gew.-% bezogen auf das Gewicht der schwarzen Schicht vorhanden ist.

4. Schirm nach einem der vorhergehenden Ansprüche, wobei das Kunststoffmaterial der licht- und/oder wärmereflektierenden Streifen auf Polyester, bevorzugt auf mindestens unixial, bevorzugter auf biaxial orientiertem Polyester, bevorzugter auf einer biaxial orientierten Folie basiert, die auf einem Kunststoff, ausgewählt aus Polyethylenterephthalat, Polybutylenterephthalat, Polytrimethylenterephthalat, den entsprechenden Naphthalaten und Copolymeren sowie Kombinationen daraus, bevorzugt Polyethylentherephtalat, basiert, wobei das Material bevorzugt mindestens 70 Gew.-% Polyester umfasst.

5. Schirm nach einem der vorhergehenden Ansprüche, wobei die licht- und/oder wärmereflektierenden Streifen auf beiden Längsseiten von einem Kunststoffmonofilament begleitet werden, wobei der Kunststoff des Monofilaments bevorzugt einen UV-Stabilisator umfasst und wobei es sich bei dem Kunststoff des Monofilaments bevorzugt um Polyethylen, bevorzugter um Niederdruck-Polyethylen oder, mit anderen Worten, um Polyethylen hoher Dichte handelt.

6. Schirm nach einem der vorhergehenden Ansprüche, wobei das Kunststoffmonofilament als gezwirntes Paar konfiguriert ist, bei dem die Querelemente dazwischen eingearbeitet sind, wobei mindestens eine Umdrehung des Paars zwischen zwei entsprechenden aufeinanderfolgenden Querelementen positioniert ist.

7. Schirm nach einem der vorhergehenden Ansprüche, wobei in Querrichtung zu den licht- und/oder wärmereflektierenden Streifen ein transparenter Streifen oder ein Leerraum entweder (i) zwischen jedem licht- und/oder wärmereflektierenden Streifen oder (ii) zwischen jedem Paar von aufeinanderfolgenden licht- und/oder wärmereflektierenden Streifen oder (iii) zwischen jeder Gruppe von drei aufeinanderfolgenden licht- und/oder wärmereflektierenden Streifen oder (iv) zwischen jeder Gruppe von vier aufeinanderfolgenden licht- und/oder wärmereflektierenden Streifen oder (v) zwischen jeder Gruppe von fünf aufeinanderfolgenden licht- und/oder wärmereflektierenden Streifen eingefügt wird.

8. Schirm nach einem der vorhergehenden Ansprüche, wobei die licht- und wärmereflektierenden Streifen mindestens 20 % der Oberfläche des Schirms, bevorzugt mindestens 35 %, optional mindestens 45 %, gegebenenfalls mindestens 55 % und ebenso gegebenenfalls mindestens 75 % der Oberfläche des Schirms bilden.

9. Schirm nach einem der vorhergehenden Ansprüche, wobei die flammhemmenden Garne auf den licht- und/oder wärmereflektierenden Streifen einfach gekreuzt angeordnet sind.

10. Schirm nach einem der vorhergehenden Ansprüche, wobei die flammhemmenden Garne ausgewählt werden aus Modacrylgarn, bevorzugt Modacrylspinnfasergarn, flammhemmendem Polyestergarn, flammhemmendem Polyester-Monofilament und Kombinationen daraus.

11. Schirm nach einem der vorhergehenden Ansprüche, wobei parallel zu dem Fadensystem, zusätzlich zu den flammhemmenden Garnen ein Kunststoffband eingebracht wird, wobei es sich bei dem Kunststoffband bevorzugt um ein transparentes oder weißes Kunststoffband handelt, wobei der Kunststoff des Bands bevorzugt einen UV-Stabilisator umfasst und wobei der Kunststoff für das Band die gleichen Anforderungen erfüllt wie der Kunststoff für die Streifen, bevorzugter Polyester, noch bevorzugter Polyethylenterephthalat (PET).

12. Schirm nach einem der vorhergehenden Ansprüche, wobei die flammhemmenden Garne und das Kunststoffband sich abwechseln.

13. Schirm nach einem der vorhergehenden Ansprüche, wobei die licht- und/oder wärmereflektierenden Streifen sich in Kettrichtung erstrecken und die flammhemmenden Garne sich in Schussrichtung erstrecken.

14. Verfahren zur Herstellung des Schirms nach einem der vorhergehenden Ansprüche, das den Schritt des Verwebens der Streifen umfasst, wobei bevorzugt die Streifen in die Kettrichtung verwoben werden.

## Revendications

1. Ecran ignifuge, drapable, destiné à procurer de l'ombre et/ou à économiser de l'énergie, en particulier dans des serres, lequel écran comporte des bandes souples dotées d'une épaisseur d'au plus 100 micromètres, lesquelles bandes sont réalisées en tant que produit continu par tissage, par tricotage, au crochet ou à l'aide de noeuds, en utilisant un système de fils,
- les bandes constituant au moins une partie de la surface du produit et au moins certaines des bandes consistant en des bandes réfléchissant la lumière et/ou la chaleur,
- au moins une partie du système de fils consistant en des fils ignifuges, **caractérisé en ce que** les bandes
a) sont réalisées en une matière plastique dotée d'un "Limiting Oxygen Index" (LOI) d'au moins 18 % et inférieure à 26 %,
b) contiennent en moyenne au plus 0,15 % en poids de phosphore (P) sur toutes les couches, lorsque l'écran comporte plusieurs couches,
c) comprennent individuellement au plus 900 ppm en poids de chlore, de fluor ou de brome, et
d) au plus 1,0 % en poids de soufre par rapport au total, les concentrations dans les bandes étant considérées par rapport au poids total du matériau des bandes, y compris tous les additifs et toutes les charges, s'il y en a.

2. Ecran selon l'une quelconque des revendications qui précèdent dans lequel au moins une couche de bandes réfléchissant la lumière et/ou la chaleur comprend une charge, de préférence d'au moins 15 % en poids, basée sur la couche comportant la charge, de préférence un matériau de charge blanc et de préférence du dioxyde de titane (TiO₂), de préférence du type de TiO₂ rutile.

3. Ecran selon l'une quelconque des revendications qui précèdent dans lequel la matière plastique du matériau réfléchissant la lumière et/ou la chaleur comporte au moins deux couches, au moins une couche étant blanche et au moins une couche étant noire, la couche blanche comprenant un pigment blanc en une quantité allant de 5 à 50 % en poids, par rapport au poids total de la couche blanche, et la couche noire comportant un agent d'assombrissement noir, l'agent d'assombrissement noir comprenant de préférence une poudre de noircissement, une poudre de carbone ou noir de carbone et/ou l'agent d'assombrissement noir étant présent de préférence en une concentration de 0,2 % à 10 % en poids, de préférence d'au moins 1,0 % en poids, par rapport au poids total de la couche noire.

4. Ecran selon l'une quelconque des revendications qui précèdent dans lequel la matière plastique des bandes réfléchissant la lumière et/ou la chaleur est à base de polyester, de préférence du polyester orienté au moins uniaxialement, plus préférablement biaxialement, plus préférablement une feuille mince orientée biaxialement, sur la base d'une matière plastique choisie dans le groupe comportant le téréphtalate de polyéthylène, le téréphtalate de polybutylène, le téréphtalate de polytriméthylène, les naphtalates correspondants, ainsi que des copolymères et des combinaisons de ceux-ci, de préférence le téréphtalate de polyéthylène, le matériau comprenant de préférence au moins 70 % en poids de polyester.

5. Ecran selon l'une quelconque des revendications qui précèdent dans lequel les bandes réfléchissant la lumière et/ou la chaleur sont accompagnées sur les deux longs côtés d'un monofilament de matière plastique, la matière plastique du monofilament comprenant de préférence un stabilisateur d'UV et dans lequel écran la matière plastique du monofilament est de préférence du polyéthylène, plus préférablement du polyéthylène basse pression ou, autrement dit, du polyéthylène haute densité.

6. Ecran selon l'une quelconque des revendications qui précèdent dans lequel le monofilament de matière plastique est configuré sous forme d'une paire ayant subi une torsion, les éléments transversaux étant incorporés entre ceux-ci, au moins un tour de ladite paire étant positionnée entre deux éléments transversaux respectifs successifs.

7. Ecran selon l'une quelconque des revendications qui précèdent dans lequel, vu dans la direction transversale par rapport aux bandes réfléchissant la lumière et/ou la chaleur, une bande transparente ou une position vide, est ménagée soit (i) entre chaque bande réfléchissant la lumière et/ou la chaleur, soit (ii) entre chaque paire de bandes réfléchissant la lumière et/ou la chaleur successives, soit (iii) entre chaque jeu de trois bandes réfléchissant la lumière et/ou la chaleur successives, soit (iv) entre chaque jeu de quatre bandes réfléchissant la lumière et/ou la chaleur successives, soit (v) entre chaque jeu de cinq bandes réfléchissant la lumière et/ou la chaleur successives.

8. Ecran selon l'une quelconque des revendications qui précèdent dans lequel les bandes réfléchissant la lumière et/ou la chaleur constituent au moins 20 % de la surface de l'écran, de préférence au moins 35 %, optionnellement au moins 45 %, éventuellement au moins 55 % et également éventuellement au moins 75 % de la surface de l'écran.

9. Ecran selon l'une quelconque des revendications qui précèdent dans lequel les fils ignifuges sont agencés sur les bandes réfléchissant la lumière et/ou la chaleur en étant croisés individuellement.

10. Ecran selon l'une quelconque des revendications qui précèdent dans lequel les fils ignifuges sont choisis parmi les fils modacryliques, de préférence les fils modacryliques filés, les fils de polyester ignifuges, les monofilaments de polyester ignifuges et des combinaisons de ceux-ci.

11. Ecran selon l'une quelconque des revendications qui précèdent dans lequel un ruban de matière plastique est agencé dans le système de fils, parallèlement à celui-ci, en plus des fils ignifuges, lequel ruban de matière plastique est de préférence un ruban de matière plastique transparent ou blanc, la matière plastique du ruban comprenant de préférence un stabilisateur d'UV et la matière plastique utilisée pour le ruban satisfaisant de préférence aux mêmes exigences que la matière plastique utilisée pour les bandes, étant plus préférablement du polyester, et encoe plus préférablement du téréphtalate de polyéthylène (PET).

12. Ecran selon l'une quelconque des revendications qui précèdent dans lequel les fils ignifuges et le ruban de matière plastique alternent.

13. Ecran selon l'une quelconque des revendications qui précèdent dans lequel les bandes réfléchissant la lumière et/ou la chaleur s'étendent dans la direction chaîne et les fils ignifuges dans la direction trame.

14. Procédé de fabrication de l'écran selon l'une quelconque des revendications qui précèdent, comprenant l'opération consistant à tisser les bandes, les bandes étant de préférence tissées dans la direction chaîne.
